Europäisches Patentamt

European Patent Office

Office européen des brevets

(11) Publication number: **0 366 039**
**A2**

## (12) EUROPEAN PATENT APPLICATION

(21) Application number: 89119619.8

(22) Date of filing: 23.10.89

(51) Int. Cl.5: **G02B 26/10 , G02B 13/00**

(30) Priority: 25.10.88 JP 270494/88

(43) Date of publication of application:
**02.05.90 Bulletin 90/18**

(84) Designated Contracting States:
**DE FR GB**

(71) Applicant: **Dainippon Screen Mfg. Co., Ltd.**
**1-1, Tenjinkitamachi Teranouchi-Agaru**
**4-chome Horikawa-Dori**
**Kamikyo-ku Kyoto 602(JP)**

(72) Inventor: **Sugata, Takeshi c/o Dainippon**
**Screen Mfg. Co., Ltd**
**Hikonechiku Jigyosho 480-1, Takamiya-cho**
**Hikone-shi Shiga(JP)**
Inventor: **Oka, Junichi c/o Dainippon Screen**
**Mfg. Co., Ltd.**
**Hikonechiku Jigyosho 480-1, Takamiya-cho**
**Hikone-shi Shiga(JP)**
Inventor: **Kawai, Kenji c/o Dainippon Screen**
**Mfg. Co., Ltd.**
**Hikonechiku Jigyosho 480-1, Takamiya-cho**
**Hikone-shi Shiga(JP)**

(74) Representative: **Goddar, Heinz J., Dr. et al**
**FORRESTER & BOEHMERT**
**Widenmayerstrasse 4/I**
**D-8000 München 22(DE)**

(54) Optical beam scanning system.

(57) An optical beam scanning system is constructed with less optical elements. A light beam $(B_1)$ of parallel rays passes through a first image forming system $(L_1)$. The first image-forming system consists of a cylindrical lens (2) having a refracting power in a direction equivalent to a main scanning direction (X) and a spherical convex lens (3). Focuses of the cylindrical lens and the spherical convex lens are within a prescribed allowance. A light beam $(B_{11})$ passing through the spherical lens has a character of parallel rays within a vertical plane and a character of convergent rays within a horizontal plane to be focused on a deflection surface $(4a)$. A reflected light beam $(B_2)$ is finally focused on a surface-to-be-scanned (8) through a second image-forming system $(L_2)$.

FIG.2

EP 0 366 039 A2

## Optical Beam Scanning System

## BACKGROUND OF THE INVENTION

Field of the Invention

The present invention relates to an optical beam scanning system comprising a deflector for deflecting a light beam from a light source and thereby scanning a surface-to-be-scanned by the deflected light beam.

Description of the Prior Art

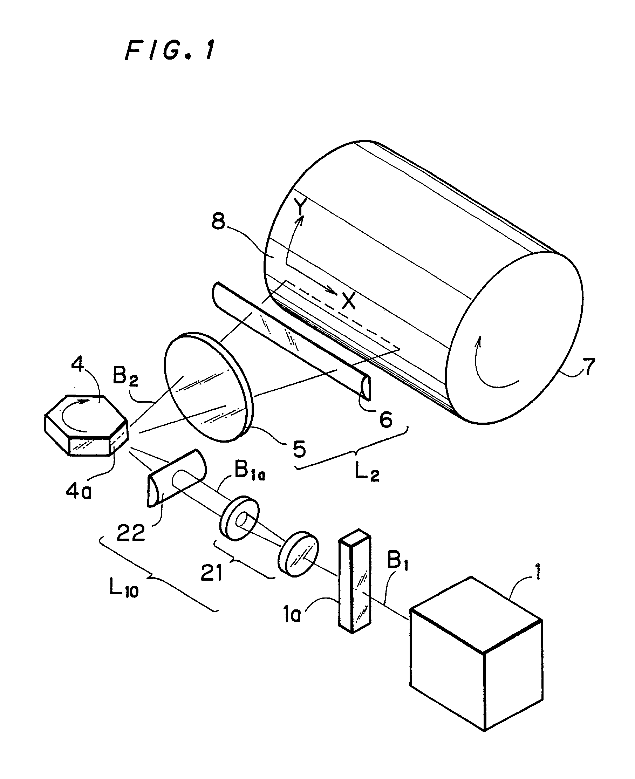

Fig. 1 is a perspective view of an optical beam scanning system of the prior art. The optical beam scanning system comprises a light source 1, an optical beam modulator 1a, a first image-forming system $L_{10}$, a deflector 4, a second image forming system $L_2$ and a recording drum 7. The surface 8 of the recording drum 7 is to be scanned by a light beam $B_2$; a direction X on the surface 8 vertical to the direction of rotation of the drum 7 is a main scanning direction and a circumferential direction Y is a subscanning direction. The surface 8 will be referred to as "image surface".

The light source 1 emits a light beam $B_1$ of parallel rays. The light beam $B_1$ is subjected to ON/OFF control by the optical beam modulator 1a such as an acousto-optic modulator (AOM).

The light beam $B_1$ then passes through the first image-forming system $L_{10}$ which consists of a beam expander 21 and a cylindrical lens 22. First, the light beam $B_1$ is expanded to be a light beam $B_{1a}$ of parallel rays by the beam expander 21 consisting of two lenses. Second, the light beam $B_{1a}$ passes through the cylindrical lens 22. The cylindrical lens 22 has a refracting power only along a vertical axis, which is equivalent to the subscanning direction Y. The focal length of the cylindrical lens 22 is the same as the distance between the cylindrical lens 22 and a deflection surface 4a of the deflector 4. Consequently, the light beam $B_{1a}$ is focused on the deflection surface 4a along the vertical axis, but not along the horizontal axis.

The light beam is deflected by the deflector 4 and focused on the image surface 8 by the second image-forming system $L_2$. The deflector 4 is a rotary polygon mirror; the polygon mirror 4 having several mirror surfaces (or deflection surfaces) 4a rotates to deflect the light beam in the main scanning direction X. The second image forming system $L_2$ consists of a $f\theta$ lens 5 and a cylindrical lens having a refracting power along the vertical axis. The second image forming system $L_2$ makes the reflection surface 4a and the image surface 8 conjugate along the vertical axis in terms of geometrical optics.

Resolving power of the optical beam scanning system is inversely proportional to the size of the cross-section of the light beam $B_{1a}$ to be converged. That is, the resolving power of the overall system is increased by expanding the initial light beam $B_1$ to the light beam $B_{1a}$.

Further, the second image-forming system $L_2$ prevents a scanning pitch irregularity, which is caused by a facet error such as inclination of the deflection surface 4a, in the subscanning direction Y.

However, the above system has some disadvantages. The provision of the two lenses of the beam expander 21 naturally renders the larger, the overall optical path length and the number of optical elements; this causes the cost of the first image forming system $L_{10}$ and makes installation and arrangement of optical elements more laborious.

## SUMMARY OF THE INVENTION

The present invention is directed to an optical beam scanning system for optically scanning a surface-to-be-scanned in a first direction, comprising: (a) a light source for emitting a light beam of parallel rays, (b) a first optical system provided in a light path of the light beam, comprising: (b-1) a cylindrical lens which has a refracting power only in a direction equivalent to the first direction, and (b-2) a spherical convex lens installed at an image side of the cylindrical lens, the spherical convex lens having a positive refracting power in every direction within a plane normal to an optical axis of the optical beam scanning system, and having an object-side focal point located substantially at the same position with a focal point of the cylindrical lens, (c) a deflector having a deflection surface which is located at an image side focal point of the spherical convex lens, and (d) a second optical system installed between the deflector and the surface-

2

to-be-scanned for focusing the deflected light beam on the surface-to-be-scanned with respect to each direction on the surface-to-be-scanned.

A distance between the object-side focal point of the spherical convex lens and the focal point of the cylindrical lens may be one millimeter.

Preferably, a focal length of the cylindrical lens is no greater than a focal length of the spherical convex lens.

Spherical aberration of the cylindrical lens may have an opposite sign to spherical aberration of the spherical convex lens.

According to the present invention, an optical path length of the optical beam scanning system can be shortened and the number of optical elemetns can be decreased because a beam expander can be omitted. Accordingly, installation and arrangement of optical elements can be done less laboriously and the total cost of the optical beam scanning system can be decreased.

These and other objects, features, aspects and advantages of the present invention will become more apparent from the following detailed description of the present invention when taken in conjunction with the accompanying drawings.


BRIEF DESCRIPTION OF THE DRAWINGS

Fig. 1 is a perspective view showing an optical beam scanning system of the prior art;

Fig. 2 is a perspective view showing an optical beam scanning system according to the present invention;

Fig. 3 illustrates a schematic plan view and a schematic elevational view of the optical beam scanning system according to the present invention;

Figs. 4, 6 and 8 are enlarged plan views of a first image-forming system according to preferred embodiments of the present invention: and

Figs. 5, 7 and 9 are graphs of spherical aberration on a deflection surface according to the preferred embodiments.


DESCRIPTION OF THE PREFERRED EMBODIMENTS

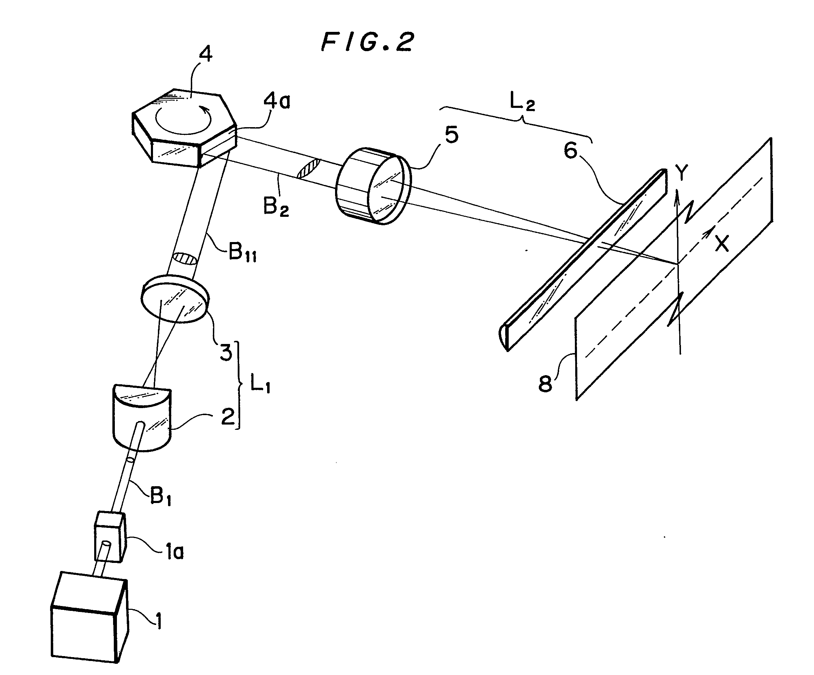

Fig. 2 is a perspective view of an optical beam scanning system according to the present invention. The optical beam scanning system comprises a light source 1, a light beam modulator 1a, a first image-forming system $L_1$ consisting of a cylindrical lens 2 and a spherical convex lens 3, a deflector 4, a second image-forming system $L_2$ consisting of $f\theta$ lens 5 and a cylindrical lens 6, and an image surface 8.

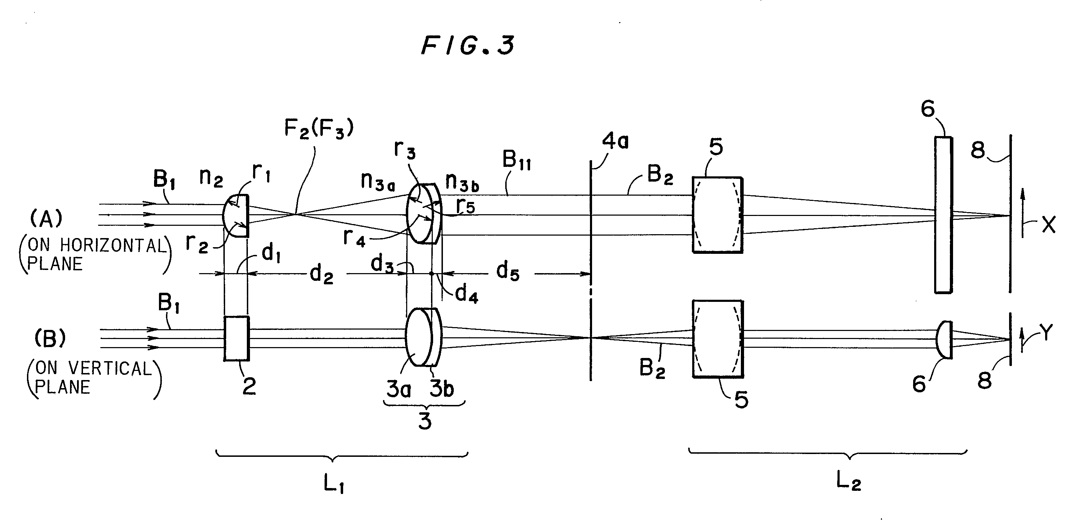

A column (A) of Fig. 3 is a schematic plan view of the optical beam scanning system and a column (B) of Fig. 3 is a schematic elevational view thereof. The light source 1 and the light beam modulator 1a are omitted in Fig. 3.

The cylindrical lens 2 of rhe first image-forming system $L_1$ has a positive refractive power along a horizontal axis, which is equivalent to a main scanning direction X on the image surface 8. The spherical convex lens 3 and the $f\theta$ lens 5 have positive refracting powers in every direction on a plane normal to the optical path of the optical beam scanning system, respectively. The cylindrical lens 6 of the second image-forming system $L_2$ has a refracting power along a vertical axis, which is equivalent to a subscanning direction Y on the image surface 8.

In Fig.3 are shown radii $r_i$ of curved surfaces of the lenses 2 and 3, and distances $d_i$, where the subscript i is an integer from one to five. The radii $r_1$ and $r_2$ are defined for the object-side and the image-side surfaces of the cylindrical lens 2, respectively. The spherical convex lens 3 is a lens combined of first and second lenses 3a and 3b. The radii $r_3$ and $r_4$ are defined for the object-side and the image-side surfaces of the first lens 3a, respectively. The image side surface of the first lens 3a corresponds to the object-side surface of the second lens 3b. The radius $r_5$ is one for the image-side surface of the second lens 3b. The distance $d_1$ is the width of the cylindrical lens 2. The distance $d_2$ is a distance between the the image-side surface of the cylindrical lens 2 and the object-side surface of the spherical lens 3. The distances $d_3$ and $d_4$ are the widths of the first and second lenses 3a and 3b, respectively. The distance $d_5$ is a distance between the image-side surface of the spherical lens 3 and a deflection surface 4a of the deflector 4.

The following table 1 shows values of parameters concerning the first image-forming system $L_1$ according to a first preferred embodiment of the present invention:

Table 1

| Radius (mm) | Distance (mm) | Refractive Index | Focal Length (mm) |
|---|---|---|---|
| $r_1$ 6.56 | $d_1$ 3.0 | $n_2$ 1.51509 | $f_2$ 12.74 |
| $r_2$ ∞ | $d_2$ 71.3 | $n_{3a}$ 1.77748 | $f_3$ 63.71 |
| $r_3$ -80.73 | $d_3$ 3.0 | $n_{3b}$ 1.83957 | |
| $r_4$ -12.65 | $d_4$ 0.5 | | |
| $r_5$ -28.25 | $d_5$ 65.0 | | |

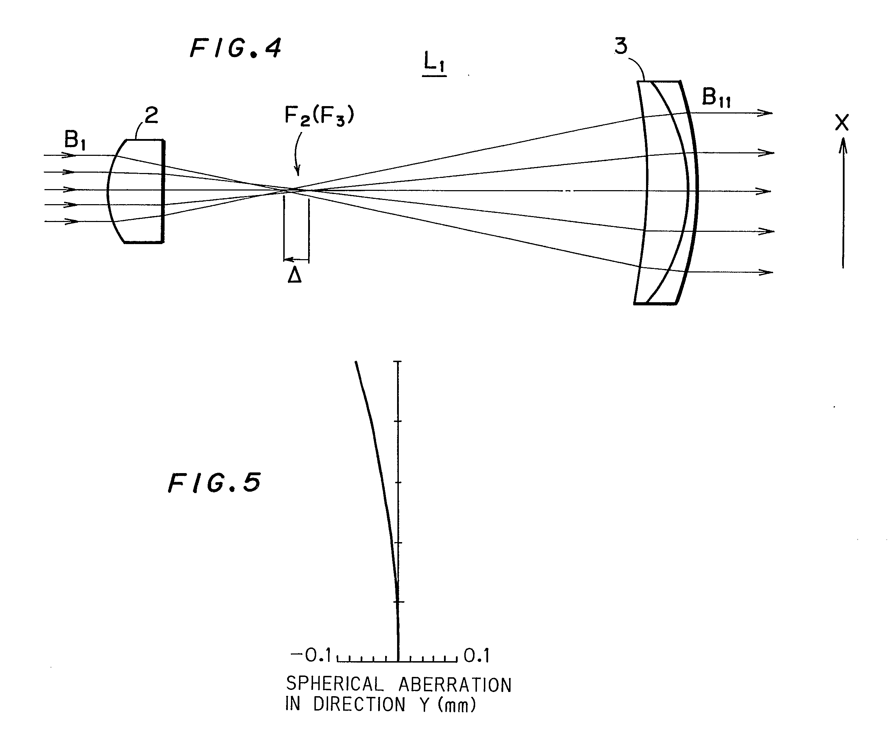

The radius $r_i$ has a positive value when the center of its curvature exists the image side (or the right hand side in Fig. 3) of the curvature. On the contrary, it has a negative value when the center exists at the object side of the curvature. The values of the refractive indexes $n_2$, $n_{3a}$, $n_{3b}$ for respective lenses 2, 3a and 3b are defined for a laser beam having a wave length of 633 nm. The focal lengths $f_2$ and $f_3$ are those of the cylindrical lens 2 and the spherical lens 3, respectively. Fig. 4 is an enlarged plan view of the first image-forming system $L_1$ according to the first preferred embodiment of the present invention.

The light beam $B_1$ of parallel rays, which is emitted from the light source 1 and subjected to ON/OFF control by the light beam modulator 1a, passes through the first image-forming system $L_1$. Because the cylindrical lens 2 has a positive power only along the main scanning direction, the light beam $B_1$ after passing through the cylindrical lens 2 converges at a focal point $F_2$ of the cylindrical lens 2 with respect to the horizontal axis corresponding to the main scanning direction X, as shown in the column (A) of Fig. 3. Even at the focal point $F_2$ of the cylindrical lens 2, the light beam $B_1$ behaves as parallel rays parallel to the optical axis.

The focal point $F_2$ of the cylindrical lens 2 is located within a prescribed allowance around a focal point $F_3$ of the spherical lens 3. Therefore, a light beam $B_{11}$ after passing through the spherical lens 3 behaves as parallel rays within a horizontal plane parallel to the optical axis and the main scanning direction X as shown in the column (A) of Fig. 3. The allowance is possibly one millimeter, preferably 50 μm, and more suitably 10 μm. Because the focal length $f_3$ of the spherical lents 3 is greater than the focal length $f_2$ of the cylindrical lens 2, the width of the light beam $B_{11}$ across a horizontal axis parallel to the main scanning direction X is larger than that of the light beam $B_1$. In other words, the first image-forming system $L_1$ functions as an optical expansion system within the horizontal plane. The light beam $B_{11}$ also exhibits a characteristic of convergent rays within the vertical plane as shown in the column (B) of Fig. 3.

As shown in Fig. 4, the cylindrical lens 2 has a negative spherical aberration Δ on the horizontal plane. On the other hand, the spherical convex lens 3 has a positive spherical aberration Δ equal to the negative spherical aberration Δ of the cylindrical lens 2. Therefore, those spherical aberrations cancel each other out. Accordingly, the light beam $B_{11}$ focuses on the deflection surface 4a without spherical aberration within the horizontal plane parallel to the main scanning direction X and the optical axis. Therefore, an image of a line is formed on the deflection surface 4a, extending in the main scanning direction X without spherical aberration in the main scanning direction X.

As shown in the column (B) of Fig. 3, the light beam $B_1$ propagates in the spherical lens 3 as parallel rays within the vertical plane. The spherical lens 3 is positioned so that the deflection surface 4a corresponds to the focal surface of the spherical lens 3. The spherical lens 3 is so designed as to show small spherical aberration when parallel rays propagate in the lens 3a from the object side. Fig. 5 is a graph of the sagittal spherical aberration in the direction Y on the deflection surface 4a, that is, the transverse aberration. Consequently, the light beam $B_1$ focused on the deflection surface 4a so as to form a lengthened linear image in the main scanning direction X, with extremely small amount of the spherical aberration in both of the directions X and Y.

After deflected by the deflector 4, the light beam $B_2$ passes through the second image-forming system $L_3$ to be focused on the image surface 8. As shown in the column (A) of Fig.3, the light beam $B_2$ has a characteristic as parallel rays within the horizontal plane parallel to the main scanning direction X and the optical axis. The cylindrical lens 6 has no refracting power in the main scanning direction X. Further, the image surface 8 corresponds to the focal plane of the fθ lens 5. Consequently, the light beam $B_2$ is focused on the image surface 8 in the main scanning direction X. On the other hand, as shown in the column (B) of Fig. 3, the light beam $B_2$ after passing through the fθ lens 5 becomes parallel rays within the vertical plane parallel to the subscanning direction Y and perpendicular to the optical axis. Because the cylindrical lens 6 has a refracting power in the subscanning direction Y and is positioned so that the image surface 8 corresponds to the focal plane of the cylindrical lens 6, the light beam $B_2$ is focused on the image surface 8 in the subscanning direction Y. In other words, the deflection surface 4a and the image surface 8 are conjugate in the subscanning direction Y.

According to the first embodiment described above, the first image-forming system $L_1$ consists of optical elements in a smaller number than that of the optical system $L_{10}$ shown in Fig. 1. Therefore, the optical path length can be shortened and the cost of the first image-forming system can be decreased.

Table 2 shows values of the parameters concerning the first image-forming system $L_{1a}$ according to a second preferred embodiment of the present invention.

Table 2

| Radius (mm) | Distance (mm) | Refractive Index | Focal Length (mm) |
|---|---|---|---|
| $r_1$ 10.0 | $d_1$ 3.0 | $n_2$ 1.51509 | $f_2$ -19.41 |
| $r_2$ ∞ | $d_2$ 23.8 | $n_{3a}$ 1.77748 | $f_3$ 48.53 |
| $r_3$ -53.75 | $d_3$ 3.0 | $n_{3b}$ 1.83957 | |
| $r_4$ -10.58 | $d_4$ 0.5 | | |
| $r_5$ -21.05 | $d_5$ 50.0 | | |

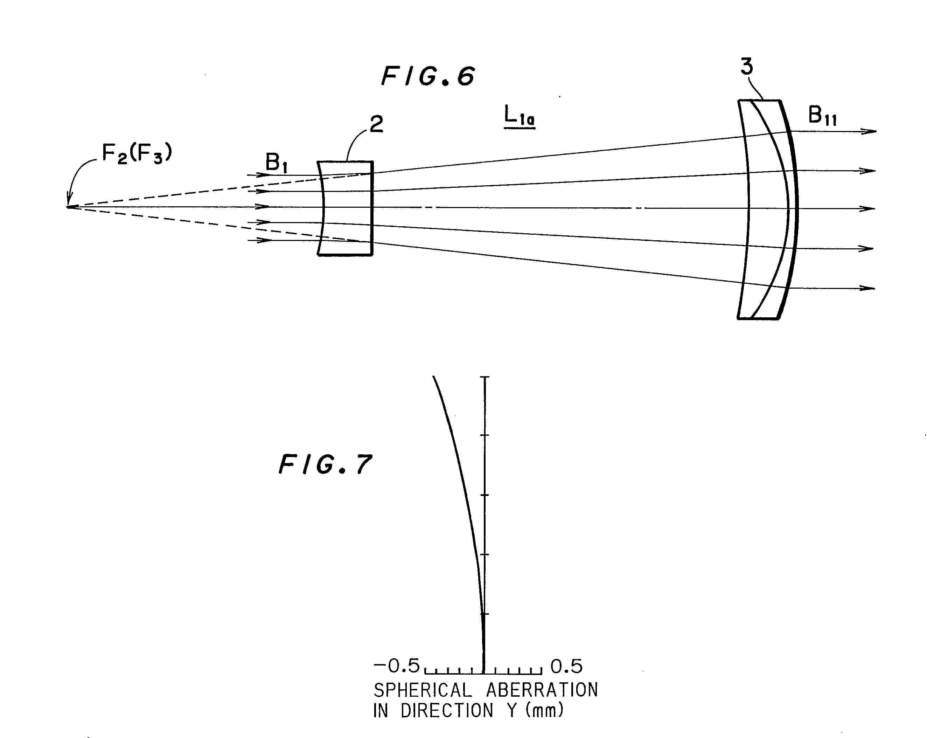

The negative value of the focal length $f_2$ indicates that the cylindrical lens 2 is a concave lens, that is, it has a negative refracting power. Fig. 6 is a plan view of the first image-forming system $L_{1a}$ according to the second embodiment. The focal point $F_2$ of the cylindrical lens 2 is located within the prescribed allowance from the focal point $F_3$ of the spherical lens 3. The first image-forming system $L_{1a}$ of Fig. 6 is equivalent to that of Fig. 4. Fig.7 is a graph of the spherical aberration in the direction Y on the deflection surface 4a.

As in the first embodiment, the light beam $B_1$ is focused on the deflection surface 4a to form a linear image, which is lengthened along the main scanning direction X, with extremely small amount of the spherical aberration in both of the directions X and Y.

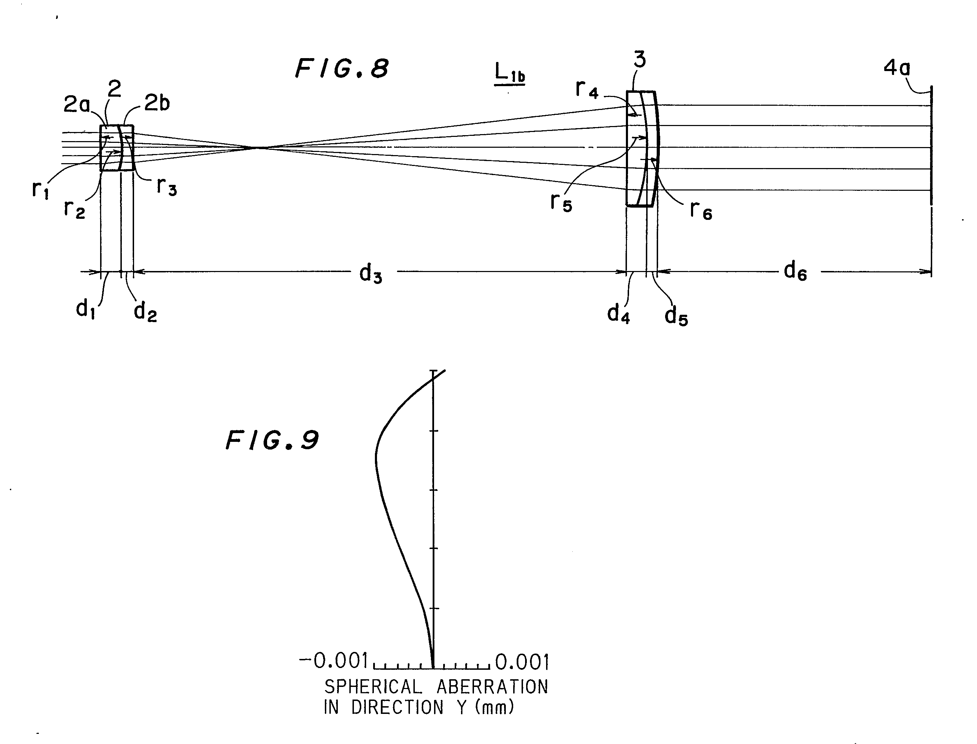

Fig. 8 is a plan view of the first image-forming system $L_{1b}$ according to a third embodiment of the present invention. The cylindrical lens 2 consists of two lenses 2a and 2b, and has a positive power as a whole. The definition of the radii $r_1$-$r_6$ and distances $d_1$-$d_6$ are different from that for the first and second embodiments shown in Fig. 3. Table 3 shows values of the parameters concerning the first image forming system $L_{1b}$ according to the third embodiment.

Table 3

| Radius (mm) | Distance (mm) | Refractive Index | Focal Length (mm) |
|---|---|---|---|
| $r_1$ 30.20 | $d_1$ 3.0 | $n_{2a}$ 1.83957 | $f_2$ 29.47 |
| $r_2$ -9.66 | $d_2$ 1.0 | $n_{2b}$ 1.77748 | $f_3$ 59.78 |
| $r_3$ ∞ | $d_3$ 85.0 | $n_{3a}$ 1.51509 | |
| $r_4$ 119.92 | $d_4$ 3.0 | $n_{3b}$ 1.61656 | |
| $r_5$ -13.28 | $d_5$ 1.0 | | |
| $r_6$ -30.62 | $d_6$ 59.4 | | |

Fig. 9 is a graph of the spherical aberration in the direction Y on the deflection surface 4a according to the third embodiment.

The spherical aberration of the cylindrical lens 2 is reduced by combining two lenses 2a and 2b. The spherical aberration of the spherical lens 3 is also kept very small. consequently, the spherical aberration on the deflection surface 4a can be reduced as shown in Fig. 9.

In the above embodiments, the focal length of the spherical lens 3 is set lager than that of the cylindrical lens 2 so that the first image-forming system functions as an optical expansion system by which the light beam B₁ is expanded in the main scanning direction X. However, the first image forming system may not be constructed as an optical expansion system. For example, when a semiconductor laser is employed as the light souce, relatively thick parallel rays can be obtained by setting a collimater lens at the outlet of the semiconductor laser; this negates the necessity of an optical expansion system.

Although the present invention has been described and illustrated in detail, it is clearly understood that the same is by way of illustration and example only and is not to be taken by way of limitation. The spirit and scope of the present invention should be limited only by the terms of the appended claims.

## Claims

1. An optical beam scanning system for optically scanning an image surface (8) in a first direction (X), comprising: a light source (1) for emitting a light beam ($B_1$) of parallel rays along an optical axis of the scanning system; a first optical system ($L_1$) for expanding and focussing the light beam ($B_1$) on a deflection surface (4a) of a deflector (4) serving to deflect the light beam ($B_2$) over the image surface (8) in the first direction (X); and a second optical system ($L_2$) located between the deflector (4) and the image surface (8) for focussing the deflected beam ($B_2$) on the image surface (8); characterised in that the first optical system ($L_1$) comprises a cylindrical lens (2) having a refracting power only in a direction corresponding to the first direction (X) and a spherical convex lens (3) located between the cylindrical lens (2) and the deflector (4) and having a positive refracting power in every direction within a plane normal to the optical axis of the scanning system, the spherical convex lens (3) having a primary focal point located at substantially the same position as a secondary focal point of the cylindrical lens (2) and the deflection surface (4a) being located at a secondary focal point of the spherical convex lens (3).

2. An optical beam scanning system in accordance with claim 1, wherein the distance between the primary focal point of the spherical convex lens (3) and the secondary focal point of the cylindrical lens (2) is one millimeter.

3. An optical beam scanning system in accordance with claim 1 or 2, wherein the focal length of the cylindrical lens (2) is no greater than the focal length of the spherical convex lens (3).

4. An optical beam scanning system in accordance with any one of claims 1 to 3, wherein one of the cylindrical lens (2) and spherical convex lens (3) has a positive spherical aberration and the other of the lenses (2, 3) has a negative spherical aberration.

5. An optical beam scanning system according to any preceding claim, wherein the second optical system ($L_2$) comprises an $f\theta$ lens (5) having a positive refractive power in every direction within a plane normal to the optical axis and a cylindrical lens (6) having a refracting power only in a direction corresponding to a second direction (Y) normal to the first direction (X).

6

*FIG.1*

## FIG.2

EP 0 366 039 A2

FIG.3

FIG.4

$L_1$

3

$B_{11}$

$B_1$

2

$F_2(F_3)$

X

Δ

FIG.5

$-0.1$ ┴┴┴┴┴┴┴┴ $0.1$

SPHERICAL ABERRATION
IN DIRECTION Y (mm)

EP 0 366 039 A2

*FIG.6*

$F_2(F_3)$

$B_1$

2

$\underline{L_{1a}}$

3

$B_{11}$

*FIG.7*

−0.5      0.5

SPHERICAL ABERRATION
IN DIRECTION Y (mm)

EP 0 366 039 A2

FIG.8

FIG.9

SPHERICAL ABERRATION
IN DIRECTION Y (mm)

-0.001      0.001

EP 0 366 039 A2